# FASCICULE DE BREVET EUROPEEN

(11) **EP 0 534 821 B1**
(45) Date de publication et mention de la délivrance du brevet: **01.05.1996**
(21) Numéro de dépôt: 92402516.6
(22) Date de dépôt: 15.09.1992
(51) Int. Cl.: H01S 3/08, H01S 3/17, G02B 5/20

(54) **Lasers de puissance à filtre semiconducteur**
Hochleistungslaser mit Halbleiterfilter
High power laser with semi-conductor filter

(30) Priorité: 24.09.1991 FR 9111740
(43) Date de publication de la demande: 31.03.1993
(73) Titulaire: THOMSON-CSF, F-75008 Paris (FR)
(72) Inventeur: Pocholle, Jean-Paul, F-92402 Courbevoie Cédex (FR); Breteau, Jean-Marc, F-92402 Courbevoie Cédex (FR); Papuchon, Michel, F-92402 Courbevoie Cédex (FR); Puech, Claude, F-92402 Courbevoie Cédex (FR)
(74) Mandataire: Guérin, Michel

(56) Documents cités:
- EP-A- 0 190 635
- US-A- 4 228 349
- JAPANESE JOURNAL OF APPLIED PHYSICS,vol. 15, no. 6, 1976, Tokyo, JP;pages 1155 - 1156,HIDENORI MATSUZAWA et al.:"Simultaneous two-wavelength oscillation in a dye-laser"
- PATENT ABSTRACTS OF JAPAN vol. 4, no. 40 (E-4)28 Mars 1980;& JP-A-55011363
- OPTICS COMMUNICATIONS, vol. 43, no. 3, Octobre 1982, Amsterdam,NL;pages 200 - 202 D. COTTER:"High-power single-frequency laser at 1.32 mum using Nd:YAG"

## Description

L'invention concerne les sources optiques cohérentes et notamment les lasers à l'état solide.

Ces lasers comportent une cavité dans laquelle peuvent être insérés des matériaux solides tels que des verres ou des cristaux dopés avec des ions terres rares qui photoexcités génèrent des émissions radiatives dont l'efficacité varie avec la fréquence d'émission. Certaines applications s'intéressent à des fréquences bien déterminées et peuvent alors être gênées par les autres émissions radiatives de plus forte efficacité. C'est pourquoi, lorsqu'une source émet au moins deux émissions radiatives à des fréquences f₁ et f₂, la fréquence f₂ se situant dans la bande spectrale à laquelle on s'intéresse, la cavité doit comprendre un dispositif de filtrage pour ne générer que l'émission recherchée à la fréquence f₂. Ce type de problème se pose notamment dans des domaines tels que la désignation d'objectif ou la télémétrie ou bien encore le façonnage industriel utilisant des lasers qui doivent répondre à des critères de sécurité oculaire. En effet le seuil de dommage optique en énergie de l'oeil est plus élevé sur la fenêtre 1,4-1,6µm. Pour cela on doit disposer de sources optiques cohérentes émettant dans cette fenêtre spectrale ; cependant si ce type de sources émet à d'autres fréquences il devient indispensable de supprimer ces dernières. Parmi les sources émettant dans la fenêtre spectrale 1,4µm-2µm, il existe des sources optiques cohérentes comprenant un matériau tel que le cristal YAG dopé avec des ions Nd³⁺ qui présente l'intérêt d'être un système à plus de trois niveaux d'énergie, niveaux entre lesquels les émissions radiatives à plusieurs fréquences sont favorisées par la présence d'une émission non radiative de plus faible énergie qui évite la saturation entre les états excités. Cependant, les longueurs d'ondes d'émission d'un cristal YAG (Y₃Al₅O₁₂) dopé Nd³⁺ sont nombreuses: L₁ = 0,946µm, L₂ = 1,06µm, L₃ = 1,318µm, L₄ = 1,8µm et plus précisément chaque niveau énergétique correspondant à ces longueurs d'onde est en fait constitué par un ensemble de sous-niveaux dûs à l'effet du champ cristallin sur les états électroniques de l'ion Nd³⁺ (effet Starck). Ainsi, il existe plusieurs longueurs d'ondes d'émission radiative voisines de L₃ qui sont plus précisément les longueurs d'onde L₃ᵢ indiquées en micromètres dans le tableau I ci-dessous, avec leur efficacité respective observée lors d'un pompage par lampe sur les différentes raies d'émission. L'efficacité est indiquée en valeur relative, et plus précisément en pourcentage d'énergie globalement émise sur l'ensemble des niveaux L₃ᵢ.

**TABLEAU 1**

| L₃ᵢ | 1,3188 | 1,3200 | 1,3338 | 1,3350 | 1,3382 | 1,3410 | 1,3564 | 1,4140 | 1,4440 |
|---|---|---|---|---|---|---|---|---|---|
| | i = 1 | i = 2 | i = 3 | i = 4 | i = 5 | i = 6 | i = 7 | i = 8 | i = 9 |
| Effic. | 34 | 9 | 13 | 15 | 24 | 9 | 14 | 1 | 0,2 |

Pour résoudre le problème de sélection de longueurs d'onde d'émission et notamment celui qui se pose dans le domaine de la sécurité oculaire, l'invention comme revendiquée dans la revendication 1 propose, lorsque l'on dispose d'un laser comportant une cavité dans laquelle est placé un matériau dopé susceptible d'émettre des transitions radiatives à au moins deux fréquences f₁ et f₂, d'insérer dans la cavité sur le trajet du faisceau une couche de matériau semiconducteur ayant une largeur de bande interdite (entre bande de valence et bande de conduction) telle que hf₂ est inférieure à la largeur de bande interdite et hf₁ est supérieure à cette largeur, h étant la constante de Planck, pour disposer d'un laser émettant à la fréquence f₂. De plus la couche de matériau semiconducteur peut être inclinée par rapport à la direction du faisceau avec une incidence de Brewster de manière à disposer d'un faisceau laser polarisé.

Lorsque l'on s'intéresse aux longueurs d'onde supérieures à 1,4µm, le matériau semiconducteur peut être un alliage InPAsGa ayant une largeur de bande interdite G située à 0,888 eV. Plus précisément, lorsqu'on utilise un matériau actif YAG dopé Nd³⁺ on peut employer un matériau semiconducteur ayant une largeur de bande interdite comprise entre 0,888 et 0,916 eV. En effet pour sélectionner les émissions radiatives se produisant aux longueurs d'ondes supérieures à L = 1,4µm il est nécessaire que les autres longueurs d'onde d'émission soient telles qu'elles génèrent des transitions possibles entre bande de valence et bande de conduction aux dépens d'émissions radiatives. Dans le cas du cristal YAG dopé Nd³⁺ les transitions L₃₁, L₃₂, ..., L₃₇ doivent donc répondre au critère (A) suivant : hc/L₃ᵢ > G (A) où
- G: est la largeur de bande interdite du matériau, encore appelée énergie de "gap"
- c: est la vitesse de la lumière (c = 3.10¹⁰ cm/s)
- h: est la constante de Planck (h = 4,14.10⁻¹⁵eV/s)

La condition (A) détermine ainsi le gap du matériau à sélectionner.

Pour éviter l'émission radiative à la plus grande de ces longueurs d'ondes soit à la longueur d'onde L₃₇ il faut donc que le gap G soit inférieur à 0,916 eV.

Des composés quaternaires de type In₁₋ₓGaₓAs_{y}P_{1-y} sont susceptibles de convenir pour des valeurs de x et y déterminées.

L'invention sera mieux comprise et d'autres avantages apparaîtront à la lecture de la description qui va suivre, donnée à titre d'exemple non limitatif et grâce à la figure unique annexée qui représente un exemple de laser selon l'invention, comprenant dans sa cavité une couche de matériau semiconducteur déposée sur un substrat et placée sur le trajet du faisceau laser.

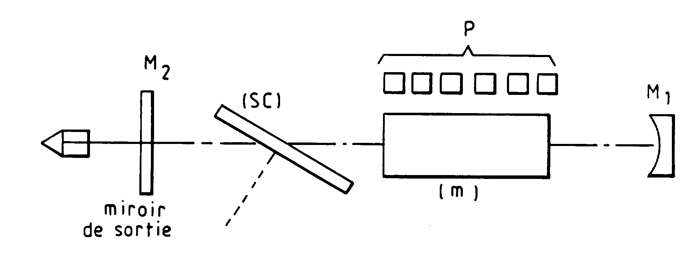

Le laser selon l'invention comprend un matériau (m) actif susceptible d'être le siège d'émission radiative cohérente, ce matériau pouvant être photopompé par des modules de pompage (P) tels que des diodes lasers, deux miroirs M₁ et M₂ permettant de constituer une cavité résonante, un des miroirs étant suffisamment semi-transparent de façon à permettre la sortie du rayonnement incident. Le laser selon l'invention comprend en outre une couche de matériau semiconducteur (SC) placée sur le trajet du faisceau lumineux (figure 1) de manière à sélectionner certaines longueurs d'onde. De plus, cette couche peut elle-même servir d'élément polarisant à la longueur d'onde de la transition laser si l'on ajuste son inclinaison par rapport à l'axe optique de la cavité. En effet, on exploite dans ce cas, la sélectivité de la transmission en polarisation liée aux conditions de Brewster qui n'entraîne un maximum de transmission que pour une polarisation particulière de la lumière incidente. C'est pourquoi après une multitude de passages dans la cavité résonante seule cette lumière polarisée se retrouve en sortie de la cavité. Cette propriété peut être particulièrement intéressante si le laser comporte de plus dans sa cavité un module de déclenchement à effet pockels permettant d'interrompre ou de laisser passer le faisceau polarisé, réalisant ainsi un laser commandable en impulsions.

Dans le cadre d'applications concernant la fenêtre spectrale 1,4µm-2µm, voici un exemple de réalisation de laser selon l'invention :

Le matériau (m) est un barreau de cristal YAG dopé Nd³⁺, pompé par des diodes lasers.

Le matériau semiconducteur placé sur le trajet du faisceau lumineux doit présenter des pertes importantes aux longueurs d'ondes inférieures à 1,4µm et une excellente transmission au-delà. Les composés semiconducteurs III-V de type GalnAsP répondent particulièrement bien à ces exigences. De plus en jouant sur la composition de cet alliage quaternaire on peut très précisément ajuster la fenêtre de transmission de l'échantillon. Ce matériau peut être déposé sur un substrat InP en utilisant les techniques classiques de dépôt par epitaxie et ce avec une excellente homogénéité sur de grandes surfaces (compatibles avec la dimension du mode d'un laser Nd : YAG). Par ailleurs afin de minimiser les pertes sur la transition laser recherchée qui se trouve au-delà de 1,4µm, il est nécessaire d'employer un substrat le plus intrinsèque possible. En effet si le substrat comporte une forte densité d'électrons, cela se traduit par une absorption liée au plasma d'électrons dont la fréquence de coupure finit par atteindre le domaine des fréquences optiques. Le composé quaternaire GalnAsP déposé sur InP doit avoir une composition telle qu'il présente une énergie de "Gap" supérieure à 0,888 et une énergie de "Gap" inférieure à 0,916 eV, de préférence entre 0,893 et 0,916 eV. Les composés suivants répondent particulièrement bien à ces critères : les composés In₁₋ₓGaₓAs_{y}P_{1-y} avec y compris entre 0,70 et 0,73 et x compris entre 0,324 et 0,338. En pratique, sur un substrat InP intrinsèque, x est défini par la relation x = 0,1894 y/0,4184 - 0,013 y, n'importe quelle combinaison de x et y ne pouvant permettre la croissance de l'alliage sur InP. Ces composés ont en effet des énergies de "Gap" comprises entre 0,893 eV et 0,906 eV. Notamment, la couche de matériau semiconducteur peut donc être une couche d'alliage In_{0,662}Ga_{0,338}As_{0,73}P_{0,27} déposée sur un substrat InP. La sélection en longueur d'onde d'une telle couche est d'autant plus efficace que les pertes introduites dans la cavité, sont plus importantes.

Or en jouant sur l'épaisseur de matériau semiconducteur, on peut contrôler ces pertes, puisque l'absorption de la plaque dépend de l'épaisseur de matériau déposé. Ainsi l'insertion d'une plaque de matériau semiconducteur InGaAsP d'épaisseur comprise entre 2 et 10µm déposé sur un substrat InP permet d'introduire des pertes suffisantes pour les transitions correspondant à l'émission des longueurs d'ondes inférieures à 1,4µm. A titre d'exemple, la variation du coefficient d'absorption entre 1,4µm et 1,32µm est de l'ordre de 1000cm⁻¹. Les dimensions de la plaque de matériau semiconducteur sont imposées par l'incidence de Brewster à laquelle on a placé la plaque par rapport à l'axe optique de la cavité. En utilisant le quaternaire In_{0,662}Ga_{0,338}As_{0,73}P_{0,27} d'indice optique 3,477 à la longueur d'onde 1,44µm, l'angle de Brewster défini entre l'axe optique de la cavité et la normale à la plaque est de 73,96°. Ce qui impose, si l'on utilise un faisceau laser cylindrique de diamètre initial 1 mm, une projection sur l'interface air-couche, définie par une ellipse dont le plus grand axe a une dimension de 3,477 mm. Ainsi, la dimension minimale de la couche de matériau semiconducteur est de 3,477 mm.

Afin d'augmenter les performances au niveau de la sélectivité en longueurs d'ondes, on peut multiplier le nombre de couches de matériau semiconducteur sur le trajet du faisceau incident augmentant ainsi l'épaisseur du milieu absorbant. Plusieurs substrats portant chacun une couche semiconductrice sont alors joints les uns aux autres.

## Revendications

1. Laser comportant une cavité (M₁, M₂) dans laquelle est placée un matériau laser (m) dopé susceptible d'émettre des transitions radiatives à au moins deux fréquences différentes f₁ et f₂, f₂ correspondant à une longueur d'onde au moins supérieure à 1,4µm caractérisé en ce qu'on place dans la cavité sur le trajet du faisceau laser, une couche de matériau semiconducteur (SC) ayant une largeur de bande interdite telle que hf₂ est inférieure à la largeur de bande interdite et hf₁ est supérieure à cette largeur, h étant la constante de Planck, le laser émettant ainsi soit à la fréquence f₂, soit à la fréquence f₂ et une ou plusieures fréquences supérieures à la fréquence f₂.

2. Laser selon la revendication 1, caractérisé en ce que la couche de matériau semiconducteur est inclinée par rapport à la direction du faisceau laser avec une incidence de Brewster pour polariser le faisceau laser.

3. Laser selon l'une des revendications 1 ou 2, caractérisé en ce que le matériau de la couche semiconducteur est un alliage quaternaire InPAsGa ayant une largeur de bande interdite supérieure à 0,888 eV.

4. Laser selon la revendication 3, caractérisé en ce que le matériau laser est un cristal YAG dopé Nd³⁺ et que le matériau de la couche semiconducteur a une largueur de bande interdite inférieure à 0,916 eV.

5. Laser selon la revendication 4, caractérisé en ce que le matériau de la couche semiconducteur a une largeur de bande interdite comprise entre 0,893 et 0,916 eV.

6. Laser selon la revendication 5, caractérisé en ce que le matériau de la couche semiconducteur est un composé quaternaire In₁₋ₓGaₓAs_{y}P_{1-y} déposé sur un substrat InP avec y compris entre 0,70 et 0,73 et x compris entre 0,324 et 0,338.

7. Laser selon la revendication 6, caractérisé en ce que le substrat InP est aussi intrinsèque que possible.

8. Laser selon l'une des revendications 1 à 7, caractérisé en ce que dans la cavité sont insérées plusieurs couches de matériau semiconducteur pour augmenter les performances au niveau de la sélectivité en longueurs d'ondes, chaque couche étant disposée sur un substrat et les substrats avec les couches de matériau semiconducteur étant joints les uns aux autres sur le trajet du faisceau laser.

## Patentansprüche

1. Laser mit einem Hohlraum (M1, M2), in dem sich ein dotiertes Lasermaterial (m) befindet, das strahlende Übergänge bei mindestens zwei unterschiedlichen Frequenzen f₁ und f₂ emittieren kann, wobei f₂ einer Wellenlänge entspricht, die mindestens größer als 1,4 µm ist, dadurch gekennzeichnet, daß im Hohlraum im Verlauf des Laserstrahls eine Schicht (SC) aus Halbleitermaterial mit einer Breite des verbotenen Bands angeordnet wird, derart, daß hf₂ kleiner als die Breite des verbotenen Bands und hf₁ größer als diese Breite ist, wobei h die Planck-sche Wirkkonstante ist, so daß der Laser entweder bei der Frequenz f₂ oder bei der Frequenz f₂ und einer oder mehreren Frequenzen emittiert, die größer als f₂ sind.

2. Laser nach Anspruch 1, dadurch gekennzeichnet, daß die Schicht aus Halbleitermaterial bezüglich der Richtung des Laserstrahls um einen Brewster-Einfallswinkel geneigt ist, um den Laserstrahl zu polarisieren.

3. Laser nach einem der Ansprüche 1 oder 2, dadurch gekennzeichnet, daß das Material der Halbleiterschicht eine quaternäre Legierung InPAsGa mit einer größeren Breite des verbotenen Bands als 0,888 eV ist.

4. Laser nach Anspruch 3, dadurch gekennzeichnet, daß das Lasermaterial ein mit Nd³⁺ dotierter YAG-Kristall ist und daß das Material der Halbleiterschicht eine unter 0,916 eV liegende Breite des verbotenen Bands besitzt.

5. Laser nach Anspruch 4, dadurch gekennzeichnet, daß das Material der Halbleiterschicht eine zwischen 0,893 und 0,916 eV liegende Breite des verbotenen Bandes besitzt.

6. Laser nach Anspruch 5, dadurch gekennzeichnet, daß das Material der Halbleiterschicht eine quaternäre Verbindung In₁₋ₓGaₓAs_{y}P_{1-y} ist, die auf ein InP-Substrat aufgebracht ist, wobei y zwischen 0,70 und 0,73 und x zwischen 0,324 und 0,338 liegt.

7. Laser nach Anspruch 6, dadurch gekennzeichnet, daß das InP-Substrat möglichst intrinsisch ist.

8. Laser nach einem der Ansprüche 1 bis 7, dadurch gekennzeichnet, daß in den Hohlraum mehrere Schichten aus Halbleitermaterial eingebracht werden, um die Wellenlängenselektivität zu erhöhen, wobei jede Schicht auf einem Substrat liegt und die Substrate mit den Schichten aus Halbleitermaterial im Strahlverlauf aneinander angefügt sind.

## Claims

1. Laser including a cavity (M1, M2) in which there is placed a doped laser material (m) capable of emitting radiative transitions at at least two different frequencies f₁ and f₂, f₂ corresponding to a wavelength at least greater than 1.4 µm, characterized in that there is placed in the cavity, on the path of the laser beam, a layer of semiconductor (SC) material having a band gap such that hf₂ is less than the band gap and hf₁ is greater than this gap, h being Planck's constant, the laser thus emitting either at the frequency f₂ or at the frequency f₂ and one or more frequencies greater than the frequency f₂.

2. Laser according to Claim 1, characterized in that the layer of semiconductor material is inclined with respect to the direction of the laser beam with an incidence at Brewster's angle to polarize the laser beam.

3. Laser according to one of Claims 1 or 2, characterized in that the material of the semiconductor layer is an InPAsGa quaternary alloy having a band gap greater than 0.888 eV.

4. Laser according to Claim 3, characterized in that the laser material is an Nd³⁺-doped YAG crystal and in that the material of the semiconductor layer has a band gap of less than 0.916 eV.

5. Laser according to Claim 4, characterized in that the material of the semiconductor layer has a band gap of between 0.893 and 0.916 eV.

6. Laser according to Claim 5, characterized in that the material of the semiconductor layer is an In₁₋ₓGaₓAs_{y}P_{1-y} quaternary compound deposited on an InP substrate with y between 0.70 and 0.73 and x between 0.324 and 0.338.

7. Laser according to Claim 6, characterized in that the InP substrate is as intrinsic as possible.

8. Laser according to one of Claims 1 to 7, characterized in that there are inserted into the cavity a plurality of layers of semiconductor material in order to increase the performance in regard to wavelength selectivity, each layer being arranged on a substrate, and the substrates with the layers of semiconductor material being joined to one another on the path of the laser beam.
